# EUROPEAN PATENT SPECIFICATION

(11) **EP 4 139 245 B1**
(45) Date of publication and mention of the grant of the patent: **05.11.2025**
(21) Application number: 21720865.1
(22) Date of filing: 21.04.2021
(51) Int. Cl.: C01B 3/04, C06B 45/00, C06D 5/04, B64G 1/62

(54) **MATERIAL AND GENERATOR FOR GENERATING HYDROGEN GAS**
MATERIAL UND GENERATOR ZUR ERZEUGUNG VON WASSERSTOFFGAS
MATÉRIAU ET GÉNÉRATEUR POUR LA GÉNÉRATION DE GAZ HYDROGÈNE

(30) Priority: 21.04.2020 EP 20170689
(43) Date of publication of application: 01.03.2023
(73) Proprietor: Nederlandse Organisatie voor toegepast-natuurwetenschappelijk Onderzoek TNO, 2595 DA 's-Gravenhage (NL)
(72) Inventor: VAN VLIET, Laurens Daniël, 2595 DA 's-Gravenhage (NL); VERBOOM, Viola, 2595 DA 's-Gravenhage (NL)
(74) Representative: V.O.
(86) International application number: PCT/NL2021/050257
(87) International publication number: WO 2021/215917

(56) References cited:
- EP-A1- 2 070 870
- WO-A1-01/23327
- WO-A2-2007/098271
- RU-C1- 2 108 282
- US-A1- 2006 237 688
- US-A1- 2009 078 345

## Description

The invention is in the field of hydrogen gas generators. In particular, the invention is directed to a solid, porous material for generating hydrogen gas and use thereof in for instance aerospace applications.

Due to its low weight to volume ratio, hydrogen gas is a typical preferred gas for use in (inflatable) aerospace applications. Supplying the hydrogen gas in traditional containers such as pressurized bottles have certain disadvantages: they are generally relatively heavy and are prone to leakage. In space, weight is in particular an issue. Therefore, as an alternative to pressurized bottles, hydrogen-generating chemical formulations are particularly suitable. The provision of hydrogen gas from these hydrogen-generating chemical formulations is based on decomposition and the concomitant gas formation of the chemical compound or material.

A hydrogen storage material is disclosed in US2006/0237688. The material comprises active material particles and a binder to immobilize the active particles sufficiently to maintain a relative space between the active particles. The active material particles are capable of storing hydrogen or may occlude and desorb hydrogen.

In US2009/0078345 an apparatus for e.g. generating hydrogen gas is disclosed. This apparatus comprises a heat generating structure comprising a substrate of a first material and a second material coating. If further comprises a third material located next to or within the structure. By thermally energizing the first and second material, the materials react with each other and an exothermic and self-sustaining reaction propagates. This exothermic and self-sustaining reaction pyrolyzes the third material. This third material may for instance be ammonia borane or borohydrides to generate hydrogen gas. However, a drawback of this apparatus is that thermite layers (*i.a*. Fe₂O₃) are required when ammonia borane is used, which is not favorable (*vide infra*)*.* Further drawbacks include a high temperature of the generated gas and the presence of a significant amount of material present that does not directly contribute to generating the hydrogen gas.

Another material is disclosed in WO2007/098271 where a hydrogen fuel element is described which includes a heat generating pyrotechnic charge comprising a pyrotechnic material and an ammonia borane encasement. A drawback is that this fuel element only functions at a relatively low pressure difference between the inside and outside of the element. Similarly to US2009/0078345, further drawbacks of the fuel element include a high temperature of the generated gas and the presence of a significant amount of material present that does not directly contribute to generating the hydrogen gas.

In US 2011/0033342, a hydrogen gas generator is described comprising a plurality of fuel pellets including a hydrogen generating compound. The pellets are composed of ammonia borane and a heat mix that is a mixture of lithium aluminum hydride and ammonium chloride. The gas generation can be initiated by heating the heat mix, which then generates enough heat to heat the ammonia borane and induce decomposition of the ammonia borane. A number of disadvantages are associated with this system, which are in particular relevant for applications in aerospace. Firstly, since the decomposition temperature is much higher (*e.g.* up to 480 °C and higher) than the auto-ignition temperature, the individual pellets must be separated by a heat-isolating space to prevent that decomposition of one pellet does not lead to the ignition of an adjacent pellet. This vacant heat-isolating space is not desirable for scaling up the system to larger applications. Secondly, it is believed that the decomposition propagates by the assistance of gravitational forces. At approximately 100 °C, ammonia borane melts and for a proper decomposition of further ammonia borane, it is believed that the system as described in US 2011/0033342 requires that the ammonia borane to be decomposed must be in good contact with the decomposing and heat generating compound. This contact will be lost in zero- or low-gravity environments. A further drawback of the system of US 2011/0033342 is that the produced hydrogen gas is of high temperature and generally requires cooling before use, adding weight and volume to the system. As such, conventional hydrogen gas generators are less suitable for application in aerospace.

It is an object of the present invention to overcome at least part of the above-mentioned disadvantages and to provide a gas generator and a chemical material for generating hydrogen gas that can produce hydrogen gas of a low temperature in a compact system.

Surprisingly, the present inventors found that an approach as described in RU 2108282 and WO0123327 can suitably be used. In RU 2108282, a cold gas generator is described comprising a housing with a solid, porous gas generating composition that is arranged such that the generated gasses are cooled by passing the gases through the porous composition in the same direction as the decomposition front is moving. A similar approach is described in EP2070870 for generating nitrogen gas. Since the gases are cooled by passing through the porous composition, the amount of emitted and transferable heat to outside the generator is low, such that a plurality of gas generators may be placed adjacent to each other without a vacant isolating space. Another advantage of this approach is that the flow of the generated gases is not dependent on gravitational forces and that propagation of the decomposition is therefore neither dependent on these forces.

Accordingly, the present invention is directed to a gas generator for generating hydrogen gas, comprising a housing for a gas generating material and an igniter. The gas generating material is a solid, porous material for generating hydrogen gas, which has a porosity of 20 to 75% based on the volume of the material, and a composition comprising, based on the weight of the material, 50 to 99% of a boron hydride compound, and 1 to 30% of a binder. Preferably the material comprises the boron hydride compound in an amount of 60 to 99%, more preferably an amount of 70 to 99%, most preferably 80 to 99%, based on the weight of the material.

The porosity of the material ensures that the generated gas can pass through the pores of the material, thereby effectively cooling the gases and heating the material sufficiently for propagation of the decomposition. The porosity is preferably not too high such that precious space is lost. This would particularly be undesirable for aerospace applications. On the other hand, the porosity should not be too low such that the gas flow is hindered since this may lead to a propagation failure or pressure build-up in the generator. A porosity of 30 to 60%, based on the volume of the material is therefore preferred, although slightly higher and lower porosity such as about 20 to 75% may still be suitable.

The use of the borane compound over other hydrogen gas generating compounds is beneficial for several reasons. For instance, the use of metal hydrides as described in US 2011/0033342 and RU 2108282, for instance lithium aluminum hydride, requires a reagent such as Fe₂O₃ that can react with the metal hydride to generate hydrogen gas. In other words, the metal hydride is not self-decomposable. The presence of additional reagents is not preferred, in particular not for aerospace application, since it reduced the amount of available space for the hydrogen gas generation compound. In addition, side products such as water may be generated that can lead to a unpredictable behavior of the system. Water, for example, can be solid, liquid or gaseous, depending on the environment, and the physical state of water has an influence on the final composition of the gas. By changing environments, for instance by aerospace applications due to varying exposures to sunlight or reentry of the earth atmosphere (*vide infra*), the water can have a significant influence on the desired effect and use of the hydrogen gas, for instance on the pressure or volume of the generated gas.

Suitable borane compounds for the present invention include ammonia borane, magnesium borane, sodium borohydride, lithium borohydride, and combinations thereof. Ammonia borane (NH₃BH₃) is particularly preferred for its higher hydrogen gas production to weight ratio compared to other borane compounds. In optimal condition, each NH₃BH₃ molecule in the decomposition decomposes to three molecules of hydrogen (3 x H₂) and one molecule boron nitride (BN). As such, 19.6 wt% of ammonia borane can potentially be converted into hydrogen gas. This is much higher than possible for metal hydrides and also for this reason, ammonia borane is preferred over metal hydrides.

The binder in the composition provides binding of the boron compound and the structural integrity and solid characteristics of the composition. In a particular embodiment, the binder is an inert binder meaning that it remains intact before, during and after the decomposition of the boron hydride compound. In certain applications of the present invention, for example the use of the gas generator and material as a fuel cell, it may be preferred to generate highly pure hydrogen gas. In these cases, decomposition of the binder would lead to impurities of the hydrogen gas. For instance, hydrocarbon-based binders such as resins may decompose into volatile hydrocarbon compounds and/or oxygen-containing compounds which may in turn lead to water production. As described hereinabove, the production of water may also be disadvantageous, in particular for aerospace applications. The use of an inert binder such as alkali metal silicate may therefore be preferred. Examples of suitable alkali metal silicates include potassium silicate, lithium silicate and sodium silicate. Potassium silicate is preferred, in particular for its lower hygroscopy with respect to the other inert binders. A lower hygroscopy facilitates to maintain a low water content in the composition, which is favorable.

In another particular embodiment, the binder preferably comprises an energetic binder meaning that it exothermically decomposes. As such, the binder provides several additional functions besides the binding and provision of structural integrity. Exothermic decomposition can assist in the propagation of the decomposition of the boron hydride compound and, if an appropriate energetic binder is selected, can generate additional gas that is useful in the final application of the material and the gas generator. In this respect, it is particularly preferred that the binder comprises an energetic binder such as a polymer based on vinyltetrazole (PVT), polyvinyltetrazole and salts thereof, glycidyl azide polymer (GAP), poly(3-nitratomethyl-3-methyloxetane) (poly(NiMMo)), poly(glycidyl nitrate) (poly(GLyN)), nitroxyethylnitramines (NENA), in particular alkyl nitroxyethylnitramine such as ethyl nitroxyethylnitramine and n-butyl nitroxyethylnitramine (BuNENA), nitro-hydroxyl terminated polybutadiene (NHTPB) and the like. Preferable energetic binders have relatively large amounts of N-N bonds or have tetrazole groups, such as polyvinyltetrazole *e.g.* poly-5-vinyltetrazole or its sodium salt, to generate a relative large amounts of nitrogen gas upon decomposition and a minimal or absent amount of water or other condensable compounds. Nitrogen gas is a clean gas and does typically not condensate under the aerospace applications for which the present invention can be used. Moreover, the additional gas produced by the above-mentioned energetic binder can even be beneficial for devices with inflatable structures (*vide infra*) as this additional gas can assist in creating a volume filled with the gases. Although it is preferred that the binders do not produce any water or other condensable compounds upon decomposition, certain binders can actually produce a small amount thereof and in that case it is preferred to maintain a low amount of these binders in the composition such that the amount of produced water is not detrimental to the application of the composition. Therefore, in particular embodiments of the present invention, a combination of one or more of the energetic and inert binders described herein can be included in the composition.

Further, the composition may comprise an energizer. This energizer may advantageously used to provide a initial activation energy to allow for the decomposition of the boron hydride compound. Additionally or alternatively, the energizer may further be used to maintain the propagation of the decomposition front. The energizer preferably does not result in the generation of water for *i.a*. the reasons disclosed above. Accordingly suitable energizers typically do not comprise oxygen. Suitable energizers preferably comprise ammonium halides, such as ammonium chloride and/or ammonium fluoride. The energizer may be present in the composition at an amount of 5 to 25 %, preferably 5 to 10 wt% based on the weight of the material. A relatively low content of energizer is preferred, such that more mass of ammonium borane can be included in the formulation.

In addition to the boron hydride compound, the binder and optional energizer, the composition may comprise additives to tune the specific characteristics of the composition. However, it is preferred that such additives do not result in the generation of water upon reaction with the boron hydride or generated hydrogen gas, *i.a*. for the reasons as described hereinabove. Therefore, modifying agents such as ferric oxide (Fe₂O₃) or sodium carbonate (Na₂CO₃) are not preferred and the composition is essentially free of these. As such, the material of the present invention is preferably essentially free of a compound or additive that directly on indirectly generates water upon reaction with the boron hydride compound. With directly and indirectly is meant that any water generation is to be prevented, including indirect generation by reactions of reaction products of the additive and the boron hydride compound. Essentially free herein means that the amount of modifying agent is sufficiently low such that it is not detrimental to the application of the composition. In particular embodiments, the composition comprises less than 15% Fe₂O₃, more preferably less than 5% Fe₂O₃, most preferably less than 1% Fe₂O₃, based on the weight of the material. Typically, the material of the present invention thus preferably comprises less than 20%, preferably less than 10%, more preferably less than 2%, most preferably less than 1% of a compound or additive that directly on indirectly generates water upon reaction with the boron hydride compound, based on the weight of the material.

The solid gas generating material is in the form of one or more porous charges having a porosity of 20 to 75 vol. %. In case of more than one gas generating charge, the first charge is initiated by means of an ignition device (igniter); the other charges are ignited successively by the preceding charge or charges. The reaction (decomposition) front moves at controlled speed away from the igniter while the hot decomposition gases pass through the porous charge or charges, thereby exchanging heat with the charge or charges so that the charge or charges warm up and the gases cool down to the initial charge temperature.

The produced hydrogen gas thus typically has a low temperature, such as the initial charge temperature or a temperature similar to the temperature of the surroundings. This low temperature may be advantageous as this typically allows for the hydrogen gas to be relatively less reactive compared to high temperature hydrogen gas. Additionally, due to the low temperature the gas may directly be used for several purposes (*vide infra*).

The charge or charges have been manufactured separately and are mounted into the housing of the gas generator in such a way that the majority of the generated gas, preferably more than 90%, more in particular more than 95% of the decomposition gases pass through the pores of the porous charge or charges.

The charge or charges may have a composition that changes over the length and or width of the charges.

The igniter may be of a classical pyrotechnic type, but it is also possible to use other (conventional) igniters.

The (first) charge is ignited at that location of the charge that is away from the gas generator outlet. The ignition takes place at the top of the first porous charge. In this way, the housing forces the hot decomposition gases to pass through the solid porous charge or charges. Thereby the generated gases cool down, while the charge or charges are being heated. By raising the temperature of the porous charge or charges, a controlled decomposition is maintained. At the exit of the last charge the gases generally have attained the (initial) temperature of the last porous charge and completely exchanged their heat with the unburned sections of the charges.

To assure that the gas generator does not discharge reaction products such as boron nitride and that the gases do not contain particulate material or unwanted chemical pollutants, the gas generator may be provided with a special filter that filters out boron hydride remnants such as boron nitride and any other unwanted pollutant and solid or liquid material. Suitable filters comprise granular material, such as activated carbon, sand, zeolite, metal oxides, and combinations thereof, either in admixture with each other or consecutively.

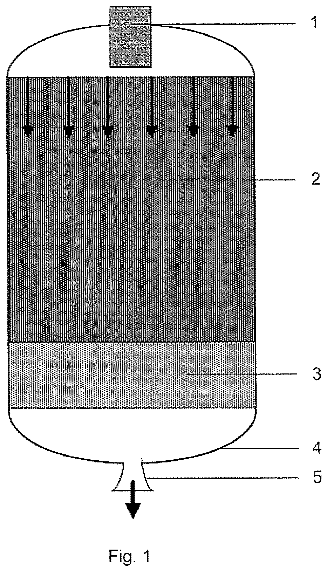

The invention will now be described with the help of figure 1, wherein the general lay-out of a gas generator of the invention is shown.

It is to be noted that the following description is not limited to the specific embodiment of the figure, as this figure is presented mainly as an aid to understanding the invention and the preferred embodiments thereof.

The gas generator as illustrated in figure 1 contains an igniter (1), and one or more porous, gas generating charges (2). It is essential that this charge or charges are porous, allowing the decomposition gases to pass through this charge or these charges. Furthermore, the gas generator may contain one or more filters (3). The gas generator has a housing (4), a vent (5) and it may have a second igniter; this igniter is optional. Moreover the gas generator may have a neutralizing charge; this neutralizing charge is also optional. The neutralizing charge can for instance be used to neutralize or activate remaining species of the boron hydride compound that are not completely decomposed, turning these species into less harmful species or hydrogen gas such that the hydrogen gas production may even be increased.

The charge may have any suitable shape, be of a smaller diameter than the main charge or be perforated, although this is not preferred. Also layouts are possible where the neutralizing charge is ignited (with some delay) by the main igniter.

The igniter (1) ignites the main gas generating charge (2). The igniter can be of any suitable classical pyrotechnic type if there is no severe requirement on the purity of the gases that are delivered by the gas generator. The igniter may comprise an initiator, which may either be an electrical one, a percussion activated initiator or an initiator that is laser ignited.

The main gas generating charge may be of different shapes or may consist of stacks of charges of suitable shapes.

Each stack may also be of a different composition as to modify the decomposition rate or the composition of the gas, and/or the composition may vary over the length and or the width of the charge.

In the figure, the charges are cylindrical; this results in a rather constant mass flow rate of the produced gases. However, by making the charges in the shape of a (truncated) cone, two truncated cones, spherical or of other suitable shapes, the mass flow rate of gas may be pre-programmed for its specific application. The hot gas passes through the porous charge or charges, thereby exchanging its heat with the initial (virgin) cool charge material and cooling the gas.

The decomposition products may then be passed through a filter, after leaving the charge to purify the gas. A secondary function of the filter is to cool down the gas that is generated by the very last portion of the last porous charge.

The charges may be cast in the container but may also be cast separately and mounted in the housing later, optionally using a liner.

The layout of the gas generator is such that the decomposition gases always pass through the porous charge (2) thereby exchanging their heat with the main charge. Any bypassing of the charge is generally avoided, either by proper sealing, or because the charge is bonded or case-bonded to the housing or has a tight fit within the housing. This serves two purposes: the decomposition gases are cooled to ambient temperature, while the charge is heated to sustain the decomposition reaction.

The gas generator and the material can be used for various applications, including fuel cells and the delivery of energy, but it may particularly be suitable for applications in aerospace. For aerospace, the generated gas may for instance be used to inflate a device to increase the surface area thereof. It is envisioned that this can particularly be suitable for landing devices and decreasing the velocity thereof early upon entry in the atmosphere of an astronomical body such as a planet or moon. Currently, landing devices enter the earths atmosphere at high velocity with concomitantly high frictional forces which generate large amounts of heat. By increasing the outer surface area of the landing device, in particular a reentry shield thereof, early upon entry in the atmosphere, the velocity may be reduced in an early stage before the frictional forces result is such high heat formation. Due to the low atmospheric pressure at high altitude (for instance at 20 km altitude, the atmospheric pressure is about 5 pKa or lower), a relatively small mass of hydrogen gas can already provide a substantial volume and accompanying surface area.

Accordingly, a further aspect of the present invention is a aerospace module such as a breaking system, preferably suitable for an aerospace landing device. The vent can be connected to an inflatable structure which is adapted such that upon inflation its outer surface area increases.

As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features.

## Claims

1. Solid, porous material for generating hydrogen gas, said material having a porosity of 20 to 75 vol%, and a composition comprising, based on the weight of the material, 50 to 99% of a boron hydride compound, and 1 to 30% of a binder.

2. Material in accordance with claim 1, wherein said boron hydride compound is selected from the group of ammonia borane, magnesium borane, sodium borohydride, lithium borohydride, and combinations thereof, preferably ammonia borane.

3. Material in accordance with any of the previous claims, wherein the binder comprises an energetic binder, preferably an energetic binder selected from the group consisting of polymers based on vinyltetrazole (PVT), polyvinyltetrazole and salts thereof, glycidyl azide polymer (GAP), poly(3-nitratomethyl-3-methyloxetane) (poly(NiMMo)), poly(glycidyl nitrate) (poly(GLyN)), nitroxyethylnitramines (NENA), in particular alkyl nitroxyethylnitramine such as ethyl nitroxyethylnitramine and n-butyl nitroxyethylnitramine (BuNENA), nitro-hydroxyl terminated polybutadiene (NHTPB) and the like, more preferably a polyvinyltetrazole such as sodium poly-5-vinyltetrazole.

4. Material in accordance with any of the previous claims, wherein the binder comprises an inert binder, preferably an alkali metal silicate such as potassium silicate.

5. Material in accordance with any of the previous claims that is essentially free of a compound or additive that directly on indirectly generates water upon reaction with the boron hydride compound.

6. Material in accordance with any of the previous claims, further comprising an energizer, preferably an energizer comprising ammonium halides, more preferably an energizer comprising ammonium chloride and/or ammonium fluoride.

7. Gas generator for generating hydrogen gas, comprising a housing for a gas generating material and an igniter, **characterized in that** the gas generating material is in accordance with any of the previous claims.

8. Gas generator according to claim 7, comprising the material in accordance with any of claim 1-6 such that upon operating at least 90% of the generated gas passes through the material.

9. Aerospace module such as a reentry shield, preferably suitable for a landing device, said aerospace module comprising the material according to any of claims 1-6 or the gas generator according to any of claims 7 and 8.

10. Aerospace module in accordance with claim 9, wherein said gas generator comprises a vent for the generated gas, which vent is connected to an inflatable structure which is adapted such that upon inflation its outer surface area increases.

11. Use of the material, gas generator or aerospace module in accordance with any of the previous claims for increasing a surface area of a landing device.

## Patentansprüche

1. Festes, poröses Material zur Erzeugung von Wasserstoffgas, wobei das Material eine Porosität von 20 bis 75 Vol.-% hat und eine Zusammensetzung, umfassend, basierend auf dem Gewicht des Materials, 50 bis 99 % einer Borhydridverbindung, und 1 bis 30 % eines Bindemittels.

2. Material nach Anspruch 1, wobei die Borhydridverbindung ausgewählt ist aus der Gruppe von Ammoniakboran, Magnesiumboran, Natriumborhydrid, Lithiumborhydrid und Kombinationen davon, vorzugsweise Ammoniakboran.

3. Material nach einem der vorstehenden Ansprüche, wobei das Bindemittel ein energetisches Bindemittel umfasst, vorzugsweise ein energetisches Bindemittel, ausgewählt aus der Gruppe bestehend aus Polymeren basierend auf Vinyltetrazol (PVT), Polyvinyltetrazol und Salzen davon, Glycidylazidpolymer (GAP), Poly(3-nitratomethyl-3-methyloxetan) (Poly(NiMMo)), Poly(glycidylnitrat) (Poly(GLyN)), Nitroxyethylnitraminen (NENA), insbesondere Alkylnitroxyethylnitraminen wie Ethylnitroxyethylnitramin und n-Butylnitroxyethylnitramin (BuNENA), Nitro-Hydroxyl-terminiertes Polybutadien (NHTPB) und dergleichen, vorzugsweise ein Polyvinyl-tetrazol wie Natriumpoly-5-vinyl-tetrazol.

4. Material nach einem der vorstehenden Ansprüche, wobei das Bindemittel ein inertes Bindemittel, vorzugsweise ein Alkalimetallsilikat wie Kaliumsilikat, umfasst.

5. Material nach einem der vorstehenden Ansprüche, das im Wesentlichen frei von einer Verbindung oder einem Zusatzstoff ist, die/der bei Reaktion mit der Borhydridverbindung direkt oder indirekt Wasser erzeugt.

6. Material nach einem der vorstehenden Ansprüche, ferner umfassend einen Aktivator, vorzugsweise einen Aktivator, umfassend Ammoniumhalogenide, bevorzugter einen Aktivator, umfassend Ammoniumchlorid und/oder Ammoniumfluorid.

7. Gasgenerator zur Erzeugung von Wasserstoffgas, umfassend ein Gehäuse für ein gaserzeugendes Material und einen Zünder, **dadurch gekennzeichnet, dass** das gaserzeugende Material in Übereinstimmung mit einem der vorstehenden Ansprüche ist.

8. Gasgenerator nach Anspruch 7, umfassend das Material nach einem der Ansprüche 1 bis 6, so dass bei Betrieb mindestens 90 % des erzeugten Gases durch das Material strömen.

9. Luft- oder Raumfahrtmodul, wie ein Wiedereintrittsschild, vorzugsweise geeignet für eine Landevorrichtung, wobei das Luft- oder Raumfahrtmodul das Material nach einem der Ansprüche 1 bis 6 oder den Gasgenerator nach einem der Ansprüche 7 und 8 umfasst.

10. Luft- und Raumfahrtmodul nach Anspruch 9, wobei der Gasgenerator eine Entlüftungsöffnung für das erzeugte Gas umfasst, wobei die Entlüftungsöffnung mit einer aufblasbaren Struktur verbunden ist, die derart ausgelegt ist, dass sich beim Aufblasen ihre Außenfläche vergrößert.

11. Verwendung des Materials, des Gasgenerators oder des Luft- und Raumfahrtmoduls nach einem der vorstehenden Ansprüche zur Vergrößerung eines Oberflächenbereichs einer Landevorrichtung.

## Revendications

1. Matériau poreux, solide pour générer du gaz d'hydrogène, ledit matériau ayant une porosité de 20 à 75 vol%, et une composition comprenant, en se basant sur le poids du matériau, de 50 à 99% d'un composé d'hydrure de bore, et de 1 à 30% d'un liant.

2. Matériau selon la revendication 1, dans lequel ledit composé d'hydrure de bore est sélectionné dans le groupe du borane d'ammoniac, du borane de magnésium, du borohydrure de sodium, du borohydrure de lithium, et de composés de ceux-ci, de préférence le borane d'ammoniac.

3. Matériau selon l'une quelconque des revendications précédentes, dans lequel le liant comprend un liant énergétique, de préférence un liant énergétique sélectionné dans le groupe consistant en des polymères à base de vinyltétrazole (PVT), le polyvinyltétrazole et des sels de celui-ci, un polymère glycidyl azide (GAP), du poly(3-nitratométhyl-3-méthyloxétane) (poly(NiMMo)), du poly(glycidyl nitrate) (poly(GLyN)), des nitroxyéthylnitramines (NENA), en particulier un alkyl nitroxyéthylnitramine comme de l'éthyl nitroxyéthylnitramine et du n-butyl nitroxiéthylnitramine (BuNENA), un polybutadiène à terminaison nitro-hydroxyl (NHTPB) et autres, plus préférablement un polyvinyltétrazole comme du poly-5-vinyltétrazole de sodium.

4. Matériau selon l'une quelconque des revendications précédentes, dans lequel le liant comprend un liant inerte, de préférence un silicate de métal alcalin comme du silicate de potassium.

5. Matériau selon l'une quelconque des revendications précédentes qui est sensiblement sans un composé ou additif qui génère directement ou indirectement de l'eau lors de la réaction avec le composé d'hydrure de bore.

6. Matériau selon l'une quelconque des revendications précédentes, comprenant en outre un activateur, de préférence un activateur comprenant des halogénures d'ammonium, plus préférablement un activateur comprenant du chlorure d'ammonium et/ou du fluorure d'ammonium.

7. Générateur de gaz pour générer du gaz d'hydrogène, comprenant un logement pour matériau générateur de gaz et un allumeur, **caractérisé en ce que** le matériau générateur de gaz est selon l'une quelconque des revendications précédentes.

8. Générateur de gaz selon la revendication 7, comprenant le matériau selon l'une quelconque des revendications 1-6 de telle manière que lors du fonctionnement au moins 90% du gaz généré passe à travers le matériau.

9. Module aérospatial comme un bouclier de rentrée, convenant de préférence pour un dispositif d'atterrissage, ledit module aérospatial comprenant le matériau selon l'une quelconque des revendications 1-6 ou le générateur de gaz selon l'une quelconque des revendications 7 et 8.

10. Module aérospatial selon la revendication 9, dans lequel ledit générateur de gaz comprend un évent pour le gaz généré, lequel évent est connecté à une structure gonflable qui est conçue pour que lors du gonflement sa surface extérieure augmente.

11. Utilisation du matériau, du générateur de gaz ou du module aérospatial selon l'une quelconque des revendications précédentes pour augmenter une surface d'un dispositif d'atterrissage.
